# EUROPEAN PATENT SPECIFICATION

(11) **EP 4 166 346 B1**
(45) Date of publication and mention of the grant of the patent: **07.08.2024**
(21) Application number: 22201569.5
(22) Date of filing: 14.10.2022
(51) Int. Cl.: B60B 7/00, B60B 7/06, B60B 7/08, B60B 7/14, B60B 1/00

(54) **BICYCLE WHEEL COVER**
FAHRRADRADABDECKUNG
ENJOLIVEUR DE ROUE DE BICYCLETTE

(30) Priority: 15.10.2021 GB 202114787
(43) Date of publication of application: 19.04.2023
(73) Proprietor: EZ Gains Ltd, Cambridge CB4 3NZ (GB)
(72) Inventor: BUTCHER, Clinton, Cambridge, CB4 2EY (GB)
(74) Representative: Kramer, Dani

(56) References cited:
- WO-A1-2020/222012
- US-A- 4 202 582
- US-A- 4 729 604

## Description

### Field of the invention

The present invention relates to a bicycle wheel cover, and in particular to a bicycle wheel cover for being attached to a spoke wheel to enhance the aerodynamic performance of the wheel. The invention also relates to a process for manufacture of a bicycle wheel cover.

### Background to the invention

Disc wheels (i.e. solid wheels) can provide significant improvements in aerodynamic performance of a bicycle as compared to spoke wheels. However, disc wheels are often prohibitively expensive for most users to purchase. Thus, there is a need for a bicycle wheel cover that would allow converting a spoke wheel to a disc wheel at a lower cost than a dedicated disc wheel.

However, existing such bicycle wheel covers suffer from a number of drawbacks. They are often easily damaged or deformed (e.g. warped) in use, for example by air flow around the wheel, and during installation. Further, existing covers are frequently not securely fixed to the bicycle wheel which may causes the cover to come away from wheel in use, particularly under the typical aerodynamic forces involved. Detachment of the cover from the wheel in use increases drag (and so reduce performance of the wheel) and can even presents a safety risk (e.g. if the cover detaches from the wheel entirely). Moreover, existing covers are often custom made to fit specific wheels which may increase manufacturing costs and reduce utility for users as they cannot re-use a cover for multiple different wheels.

WO2020222012A1 describes a bicycle wheel system comprising a bicycle wheel and at least one wheel cover. The bicycle wheel comprises attachment means for removably attaching the wheel cover to the bicycle wheel. The wheel cover is interchangeable with wheel covers of different dimensions (e.g. rim depths, profiles and/or widths) such that the wheel cover fitted to the bicycle wheel is suited to the riding conditions. The wheel cover can be chosen to minimise the aerodynamic drag of the bicycle wheel and/or how readily the bicycle wheel might catch a crosswind, which can be two competing considerations.

The wheel cover can be interchanged with another wheel cover (or simply removed) without removing the bicycle wheel from the bicycle frame. The wheel cover has a planar portion at its radially outer side and a domed portion extending in radially inner direction.

The present invention seeks to at least partially alleviate the above-mentioned disadvantages.

### Summary of the invention

Aspects and embodiments of the present invention are set out in the appended claims. These and other aspects and embodiments of the invention are also described herein. According to an aspect of the invention, there is provided a bicycle wheel cover comprising: a drive side disc having a drive side disc body adapted to cover the drive side of a bicycle wheel; and a non-drive side disc having a non-drive side disc body adapted to cover the non-drive side of a bicycle wheel, the non-drive side disc body comprising an inner domed portion and an outer planar portion, wherein: at least one of the drive side and non-drive side discs comprises a wheel securement structure arranged to permit a connection between the disc and a bicycle wheel; at least one of the drive side and non-drive side discs comprises a disc securement structure arranged to permit a connection between the discs; and the drive side disc body is domed between its inner edge and its outer edge.

Preferably, the doming of the drive side disc body is shallower than the doming of the domed portion of the non-drive side disc body.

Preferably, the doming of the drive side disc body and/or the doming of the domed portion of the non-drive side disc body has a constant gradient.

Preferably, the doming of the drive side disc body and/or the doming of the domed portion of the non-drive side disc body has a gradient that varies along the disc radius, preferably wherein the gradient increases with radius.

Preferably, the drive side and/or non-drive side disc body comprises a central opening arranged to receive a bicycle wheel hub, and wherein the wheel securement structure is located around (preferably at) the central opening of at least one of the discs.

Preferably, the wheel securement structure is located on the drive side disc, preferably solely on the drive side disc.

Preferably, the wheel securement structure is arranged to permit a connection with at least one spoke of a bicycle wheel.

Preferably, the wheel securement structure comprises apertures arranged to receive a tie for connecting with a spoke of a bicycle wheel.

Preferably, the apertures are arranged in a circular formation.

Preferably, the apertures are arranged in groups, each group spaced apart from one another.

Preferably, the apertures are arranged in groups of three or more, preferably in groups of between three and five apertures, more preferably in groups of four apertures.

Preferably, the disc securement structure comprises a structure located on the outer planar portion of the non-drive side disc body, and a corresponding structure located on the drive side disc body.

Preferably, the disc securement structure comprises corresponding apertures through each of the drive side disc body and non-drive side disc body, the apertures being adapted to receive a screw.

Preferably, the apertures are arranged in a circular formation, preferably wherein the apertures are equally distributed around the circular formation.

Preferably, at least one of the drive side disc body and the non-drive side disc body is rigid, preferably wherein both the drive side and non-drive side disc bodies are rigid.

Preferably, the drive side disc body and/or the non-drive side disc body are formed as a single piece around their circumferences.

Preferably, at least one of the drive side and non-drive side disc bodies is formed of acrylonitrile butadiene styrene, preferably wherein both the drive side and non-drive side disc bodies are formed of acrylonitrile butadiene styrene.

According to another aspect of the invention there is provided a kit of parts comprising: a bicycle wheel cover as previously described, and an annular spacer, wherein the annular spacer comprises a central opening adapted to receive a bicycle wheel hub, and wherein the outer diameter of the annular spacer is more than or equal to the diameter of a central opening of the drive side and/or non-drive side disc body.

According to another aspect described herein, which does not form part of the claimed invention, there is provided a method of manufacturing bicycle wheel cover (particularly, a disc of a bicycle wheel cover) comprising: heating a material sheet; moulding the heated sheet over a mould, the mould comprising heating and/or cooling elements for controlling the temperature of the mould; and cutting the moulded sheet to form the bicycle wheel cover, wherein, while moulding the heated sheet over the mould, the heating and/or cooling elements are controlled to maintain the mould at a substantially constant temperature.

Preferably, the step of moulding the heating sheet over the mould comprises using a vacuum pump to pull the sheet onto the mould.

Preferably, the mould is formed of an air porous material.

Preferably, the mould comprises water pipes for cooling the mould.

Preferably, the mould comprises a domed inner portion and a flat outer portion, and wherein the sheet, after being moulded over the mould, also comprises a domed inner portion and a flat outer portion.

Preferably, the method is a method of manufacturing a bicycle cover as previously described.

The invention is not restricted to the details of any foregoing embodiments.

As used herein, the term "domed" or "doming" or related terms preferably connote a dome-shaped structure. These terms include structures with a rounded or hemi-spherical type shape. These terms also include conical or funnel shaped structures with a constant gradient. These terms also include flat-topped dome-shaped or cone-shaped structures. The term "domed" is interchangeable with the term "conical".

The terms "inner" and "outer" preferably connote locations on a disc of the wheel cover that are respectively closer to or further from the centre of the disc. Similarly, the term "centre" means the inner most part of a disc, which may be the centre of a central opening in the disc or the inner most part of the disc body (i.e. the inner edge) depending on the context.

The term "rigid", when used with reference to a disc of the bicycle wheel cover, is used to mean that the disc does not bend under its own weight, such that the disc is substantially stiff when handled by a user.

### Brief description of the figures

Embodiments of the invention will now be described, by way of example only, with reference to the accompanying drawings, in which:
Figure 1 is a front view of the drive side disc of the bicycle wheel cover disclosed herein;
Figure 2 is a perspective view of the drive side disc of Figure 1 ;
Figure 3 is a side profile view of the drive side disc of Figures 1 and 2;
Figure 4 is a front view of the non-drive side disc of the bicycle wheel cover disclosed herein;
Figure 5 is a perspective view of the non-drive side disc of Figure 4;
Figure 6 is a side profile view of the non-drive side disc of Figures 4 and 5; and
Figure 7 is a flowchart of the method of manufacturing a bicycle wheel cover, which does not form part of the claimed invention.

### Detailed description

The bicycle wheel cover disclosed herein comprises two main parts: a drive side disc; and a non-drive side disc. The two discs fit together to form a wheel cover which can be used to convert a spoke wheel to a disc wheel. At least one of the discs comprises a wheel securement structure which is arranged to permit connection of that disc to the wheel, and at least one of the discs comprises a disc securement structure which is arranged to permit a connection between of the two discs. In this way, the discs of the bicycle wheel cover are secured to one another (via the disc securement structure) and then to the bicycle wheel itself (via the wheel securement structure).

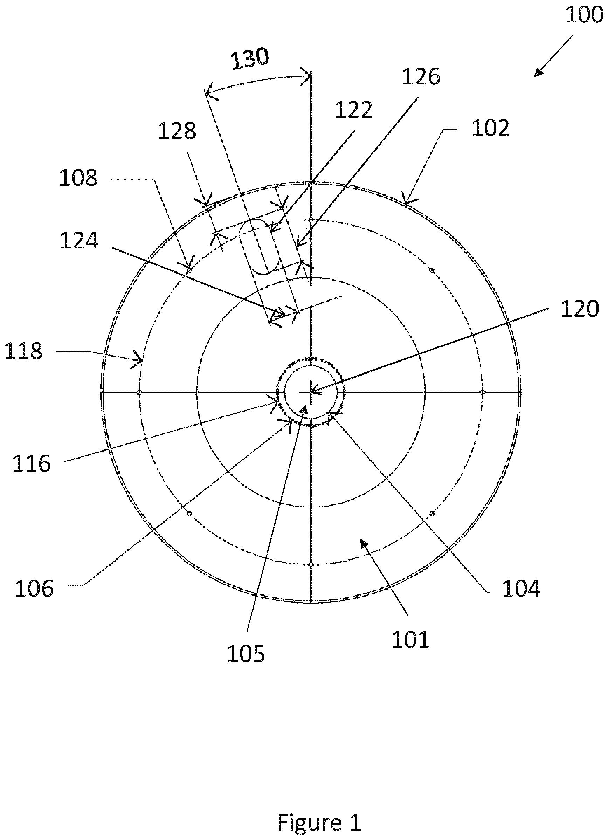

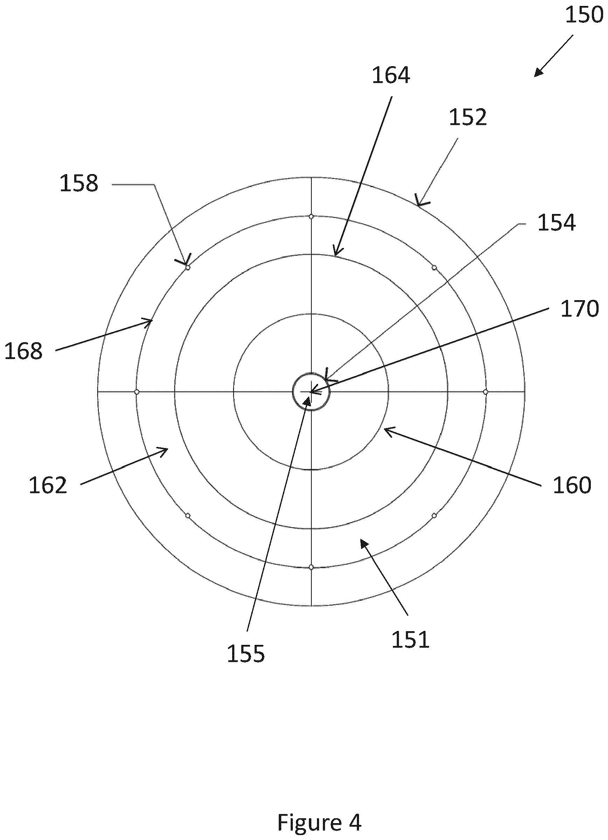

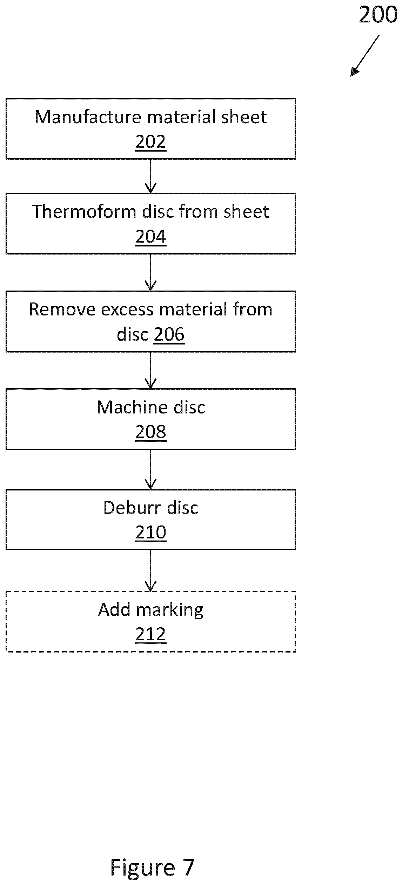

Below, the drive side disc of the bicycle wheel cover is described with reference to Figures 1 to 3, the non-drive side disc of the bicycle wheel cover is described with reference to Figures 4 to 6, and a method for manufacturing the bicycle wheel cover is described with reference to Figure 7.

### Drive side disc

Figures 1 to 3 show a disc 100 of the bicycle wheel cover for covering a drive side of a spoke bicycle wheel. The drive side disc 100 comprises a body 101 having a circular outer edge 102, and a concentric circular inner edge 104. The inner edge 104 surrounds a central opening 105 in the disc body 101. The outer edge 102 is shaped to fit a rim of the bicycle wheel such that the drive side disc body 101 is arranged to cover the spokes of the wheel when the drive side disc 100 is attached to the wheel. Thereby, the drive side disc 100 allows converting a spoke bicycle wheel to a disc wheel. The inner edge 104 and central opening 105 are sized and shaped to receive a hub of the wheel through the opening 105 when the drive side disc 100 is attached to the bicycle wheel. Example dimensions of the inner and outer edges are listed below. Optionally, a chamfer is provided around the outer edge 102. This may reduce damage to the rim of the wheel during fitting of the disc 100 and in use.

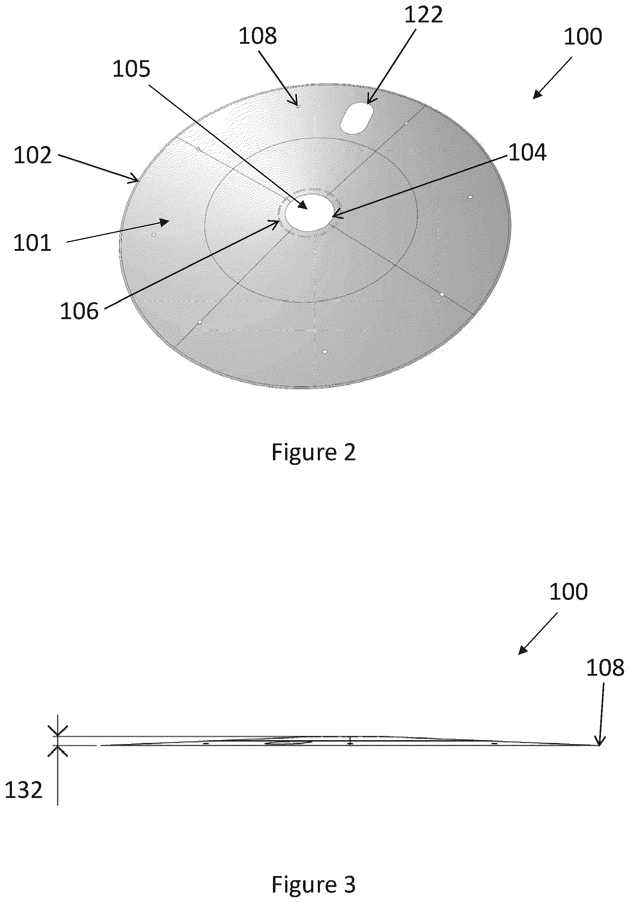

As shown in Figure 3, the drive side disc body 101 is domed between its centre (that is, the inner edge 104 around the central opening 105) and the outer edge 102. Therefore, the inner edge 104 and central opening 105 are raised (by a distance 132) as compared to the outer edge 102 of the drive side disc 100. Accordingly, the disc body 101 accommodates the shape of the spokes which are typically at an angle to the plane of the wheel rim and extend out beyond the plane of the wheel rim. The degree of doming of the drive side disc body 101 (i.e. the distance 132) is selected so that, when the drive side disc 100 is attached to the wheel, the doming of the drive side disc body 101 is sufficiently large to accommodate the wheel spokes but sufficiently small that there is a slight clearance between the disc body 101 and the gear cassette.

The drive side disc body 101 is formed as a single piece around its circumference; that is, there is no continuous gap in the disc between the inner edge 104 and the outer edge 102. The drive side disc body 101 is rigid (that is, it does not bend under its own weight, e.g. if held horizontally from its outer edge 102) and it is preferably made from acrylonitrile butadiene styrene (ABS) thermoplastic.

Optionally, the rim is provided with a protective layer (e.g. electrical tape) around some or all of its circumference so that, when the drive side disc 100 is attached to the wheel, the protective layer is positioned between the rim and the disc body 101 at the contact surface between the rim and the disc body 101. This reduces damage to the rim and provides a more secure engagement of the disc body 101 against the wheel rim.

The drive side disc 100 also comprises a valve aperture 122 for a valve of the wheel, so that the wheel can be inflated when the drive side disc 100 is still attached to it. Possible dimensions and location of the valve aperture 122 on the wheel (as indicated by reference numerals 124, 126, 128, 130) are provided in the table below. Optionally, the drive side disc 100 further comprises a cover (not shown) for the valve aperture 122. The valve aperture cover is removably attachable to and detachable from the valve aperture 122 so that it can be removed for inflating the wheel and reattached to cover the aperture 122 during cycling to improve aerodynamic performance of the disc 100 in use. For example, the cover may be made from a flexible rubber material that can be pushed into the aperture 122. Alternatively, the cover may be for single use only - for example, a plaster that can be stuck on to the disc 100 surface over the aperture 122.

The drive side disc 100 further comprises a wheel securement structure which is arranged to permit connection of the drive side disc 100 to the wheel. In the example shown in Figures 1 to 3, the wheel securement structure comprises apertures 106 through the drive side disc body 101. The apertures 106 are arranged in a circular formation 116. The circular formation 116 of the apertures 106 surrounds the central opening 105. As shown in Figure 1, the circular formation 116 of apertures 106 is centred on a centre point 120 of the drive side disc 100 such that the circular formation 116 is concentric with the inner edge 104 of the central opening 105 and concentric with the outer edge 102 (i.e. the perimeter) of the drive side disc body 101. In this way, the apertures 106 surround the inner edge 104.

The apertures 106 are arranged in groups of two or more; such as in groups of three or five apertures. In the example drive side disc 100 shown in Figures 1 to 3, the apertures 106 are arranged in groups of four apertures. The group of apertures 106 are arranged adjacent one another around the circular formation 116. Each of the groups of four apertures is spaced apart from one another around the circular formation 116. The spacing between the groups of apertures 106 ensures that the disc body 101 is not structurally weakened by the apertures 106 through it.

The apertures 106 are arranged to receive engagement means (not shown) for securing the disc 100 to the spokes. In the present example, the engagement means is a tie, preferably a cable/zip tie, and the drive side disc 100 is attached to the spokes by:
- aligning the drive side disc 100 with the wheel (i.e. aligning the centre of the disc with the centre of the wheel), and fitting the drive side disc 100 over the hub of the wheel (to do so, the gear cassette is removed to expose the hub which is then received through the central opening 105 of the drive side disc body 101)
- inserting one end of the tie through a first aperture 106 from the outside of the wheel, inserting the other end of the cable tie through a second, preferably adjacent, aperture 106 from the outside of the wheel, and securing the tie around a spoke (on the inside of the drive side disc 100) thereby attaching the drive side disc 100 to the spoke
- Once the cable ties are secured around a plurality of spokes, the cables are gradually tightened in sequence to provide a secure fit and prevent movement of the drive side disc 100. The cable ties are secured on the inside side so that the cable ties do not stick out of the front of the disc 100 and drag of the wheel is thus minimised
- Finally, the gear cassette is then reattached to the wheel hub over the drive side disc 100.

This process is then repeated for a plurality of spokes (preferably at least four spokes, evenly distributed around the circular arrangement of apertures 106, i.e. around 90 degrees apart) to secure the drive side disc 100 to the spokes and thereby to the wheel.

Most wheels comprise 12 spokes on the drive side, so, in this example, the disc 100 comprises 12 groups of apertures 106 (each group comprising 4 apertures), each group of apertures intended to provide a means to secure a table tie to one spoke, so a total of forty-eight apertures 106.

The arrangement of the wheel securement structure provides a number of advantages as follows:
- The circular arrangement of groups of four apertures provides the user with a choice of apertures through which to thread the tie at each point of connection between the drive side disc 100 and the spokes. For example, the user may thread the cable tie through the first and second apertures in one group, and through the third and fourth apertures of another group. This enables to user to select the apertures that provide the best alignment with the spoke, and thus achieve the best fit with the least amount of slack in the cable ties. This ensures that the drive side disc 100 is attached to the spokes without bending or otherwise damaging the spokes, and equally without putting too much strain on the cable ties.
- The circular arrangement of groups of four apertures is also convenient for aligning the valve aperture 122 with the air valve of the wheel on a range of different wheels (i.e. wheels provided by different manufacturers). This is because the user can rotate the drive side disc 100 until the valve aperture 122 and the valve are aligned, and the user will then have a selection of apertures 106 through which to connect the disc 100 to the spokes and can select whichever apertures would provide the best fit. If the disc 100 were instead provided with fewer apertures, or apertures that were arranged individual, or in groups of only two, the user might find that they must choose between achieving a good alignment between the valve aperture 122 and the valve and a good alignment between the apertures and the wheel spokes. For this reason, the valve aperture 122 is provided in the drive side disc rather than the non-drive side disc (since the drive side disc provides more scope for the user to accurately align the aperture 122 with the wheel valve.

- This circular formation 116 of apertures 106 also provides for an even distribution of forces between apertures 106 when the apertures 106 are used to attach the drive side disc 100 to a wheel which ensures a more secure fit as well as improved durability.
- The rigidity of the domed disc in combination with the central connection of the disc to the wheel spokes forces the outer edge of the disc against the wheel when the disc is attached to the wheel. This is because, when the disc is secured to the wheel via the wheel securement structure around the central opening 105, the centre of the disc is pulled towards the disc to flatten the disc against the doming. As a result of the resiliency of the rigid disc, this causes the outer edge of the disc to press firmly against the rim of the wheel to provide a secure fit against the rim.

More generally, securing the drive side disc 100 to the wheel towards the centre of the disc (i.e. via the wheel securement structure surrounding the central opening 105) is advantageous because it has the effect of pulling the drive side disc 100 tight against the wheel, close to the spokes. This has a number of advantageous. Firstly, this improves the aerodynamic performance of the wheel cover by making the wheel cover more streamlined through the air. Secondly, pulling the drive side disc 100 closely against the spokes of the wheel ensures a clearance between the drive side disc 100 thus preventing the disc 100 from rubbing on the gear cassette while freewheeling (when the gear cassette is static, but the wheel is rotating). Thirdly, tightly attaching the drive side disc 100 near its centre to the wheel ensures that the disc 100 cannot move laterally along the wheel axis, such as might happen if the wheel deforms under the force of the air against the disc 100 in use. In other existing wheel covers, there is no direct securement of the disc to the wheel at all, let alone at the centre of the disc, meaning that the centre of the disc will be able to freely move laterally along the wheel axis (i.e. in the gap between the wheel spokes and the gear cassette) and will thus tend to flap in the wind in use, which impedes aerodynamic performance.

It will be appreciated that engagement means other than cable ties could be used instead - e.g. strings or Velcro straps. In addition, an alternative first set of engagement features for attaching the drive side disc 100 to the wheel could be provided, for example annular snap-fit connection points could be provide on the inside surface of the disc 100 to provide a snap fit connection with spokes of the wheel.

The drive side disc 100 also comprise part of a disc securement structure which is arranged to permit a connection between the drive side disc and the non-drive side disc. The disc securement structure on the drive side disc 100 comprises further apertures 108 through the drive side disc body 101. As shown in Figure 1, the apertures 108 of the disc securement structure are arranged symmetrically in a circular formation 118 centred on a centre point 120 of the disc 100. That is, the circular formation 118 of the apertures 108 of the disc securement structure us concentric with the circular formation 116 of the apertures 106 of the wheel securement structure. The apertures 108 of the disc securement structure are arranged individually, rather than in groups, and are spaced apart such that the apertures 108 are distributed equidistant around the circular formation 118. Spacing the apertures 108 apart in this way ensures that the structural integrity of the drive side disc body 101 is not compromised by the apertures 108.

In the present example, the apertures 108 of the drive side discs are sized and shaped to receive a retaining screw (e.g. of 15mm-20-25mm dimensions) through each aperture to connect together the drive side disc 100 and the non-drive side disc. The circular formation 118 of evenly distributed apertures 108 is thus advantageous because it provides for an even distribution of forces between each aperture 108 which ensures a more secure connection between the two discs as well as improved durability.

### Non-drive side disc

Figures 4 to 6 show another disc 150 of the bicycle wheel cover for covering a non-drive side of a spoke bicycle wheel. The non-drive side disc 150 comprises a body 151 having a circular outer edge 152, and a concentric circular inner edge 154. The inner edge 154 surrounds a central opening 155 in the disc body 151. The outer edge 152 is shaped to fit a rim of the bicycle wheel such that the non-drive side disc body 151 is arranged to cover the spokes of the non-drive side of the wheel when the non-drive side disc 150 is attached to the wheel. Thereby, the non-drive side disc 150 allows converting a spoke bicycle wheel to a disc wheel. The inner edge 154 and central opening 155 are sized and shaped to receive a hub of the wheel through the opening 155 when the non-drive side disc 150 is attached to the bicycle wheel. Example dimensions of the inner and outer edges are listed below. Optionally, a chamfer is provided around the outer edge 152. This may reduce damage to the rim of the wheel during fitting of the disc 150 and in use.

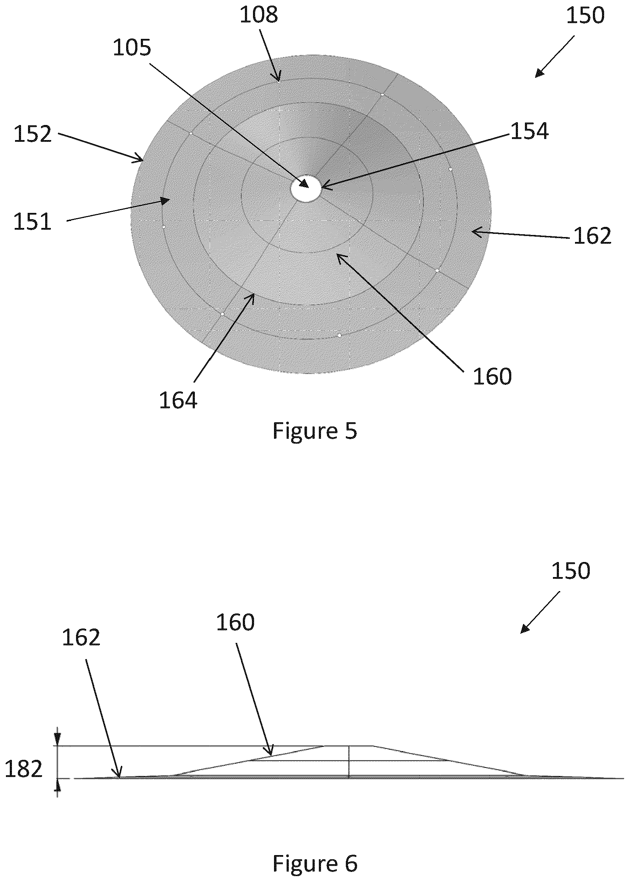

As shown in Figures 5 and 6, the non-drive side disc body 151 comprises an inner domed portion 160 and an outer planar portion 162. Figures 4 and 5 show the boundary 164 between the inner domed portion 160 and the outer planar portion 162 of the non-drive side disc body 151. However the non-drive side disc body 151 is formed as a single piece around its circumference; that is, there is no continuous gap in the disc between the inner edge 154 and the outer edge 152. The non-drive side disc body 151 is rigid (that is, it does not bend under its own weight, e.g. if held horizontally from its outer edge 152) and it is preferably made from acrylonitrile butadiene styrene (ABS) thermoplastic.

The inner domed portion 160 is domed between its centre (that is, the inner edge 154 of the central opening 155) and the boundary 164 with the outer planar portion 162. The outer planar portion 162 of the non-drive side disc body 151 is flat and extends from the boundary 164 between the inner and outer portions to the outer edge 152 of the non-drive side disc body 151. Therefore, the inner edge 154 and central opening 155 are raised (by a distance 182) as compared to the outer planar portion 162 of the non-drive side disc 150. Accordingly, the non-drive side disc body 151 accommodates the shape of the spokes which are typically at an angle to the plane of the wheel rim and extend out beyond the plane of the wheel rim (particularly at the centre of the wheel).

The degree of doming of the non-drive side disc body 151 (i.e. the distance 182) is selected so that, when the non-drive side disc 150 is attached to the wheel, the doming of the non-drive side disc body 151 is sufficiently large to accommodate the wheel spokes but sufficiently small that there is a slight clearance between the disc body 101 and any brake (e.g. a disc brake) outside the non-drive side disc 150. Furthermore, while the doming of the inner domed portion 160 is shown in Figures 5 and 6 to be of a constant gradient (i.e. the domed portion 160 has a conical shape, albeit with a flat top due to the central opening 155) in other examples the gradient of the doming might vary along the distance from the centre of the disc 150 (i.e. the doming might vary with radius) - specifically, the gradient of the doming might increase (i.e. drop down more steeply to the planar outer portion 162) further from the centre of the disc (i.e. with larger radius).

The degree of doming of the non-drive side disc 150 (i.e. the distance 182) is larger than the degree of doming of the drive side disc 100 (i.e. the distance 132). The reason for this is that, on a typical bicycle wheel, the spokes protrude further out from the plane of the bicycle wheel on the non-drive side in order to centre the wheel on the wheel axis, since there is no gear cassette on the non-drive side of the wheel axis. Therefore, the asymmetric doming of the drive side and non-drive sides discs of the present wheel cover is advantageous because it accommodates for the inherent asymmetry in the doming of the spokes of a typical bicycle wheel - this is particularly advantageous over existing bicycle wheel covers which have identical or interchangeable drive side and non-drive side wheel covers which thus do not accommodate for the asymmetry of the bicycle wheel spokes.

The outer planar portion 162 is planar in the sense that it is flat (i.e. is it not domed or curved) and that is extends out from the boundary 164 to the outer edge 152 in the plane of the non-drive side disc 150 (which plane is parallel to the plane of a wheel rim when the non-drive side disc 150 is attached to a wheel. The outer planar portion 164 thus acts as a flange surrounding the inner domed portion 162 in order to facilitate connection between the non-drive side disc 151 and the drive side disc 100 to connect the discs together across a wheel.

The planar outer portion 162 provides a face-to-face contact with the rim of a bicycle wheel when the non-drive side disc 150 is attached to the wheel. This is because the planar outer portion 162 will overlap with the side face of the wheel rim. This provides a number of advantages. First, this allows for easier attachment of the non-drive side disc 150 to the wheel because the planar outer portion 162 will lie flat again the wheel rim while the non-drive side disc 150 is being attached to a wheel (which would not be achieved if the disc 150 was domed all the way to its outer edge 152). Second, the face-to-face contact between the outer planar portion 162 at the wheel rim provides a tighter seal between the non-drive side disc 150 and the wheel rim as compared to a disc which meets the rim at an angle (i.e. one that is domed all the way to its outer edge). This makes it less likely that the non-drive side disc 150 will come away from the rim in use (under air drag) and so improves aerodynamic performance and improves safety for the user.

Optionally, the rim is provided with a protective layer (e.g. electrical tape) around some or all of its circumference so that, when the non-drive side disc 150 is attached to the wheel, the protective layer is positioned between the rim and the planar outer portion 162 at the contact surface between the rim and the planar outer portion 162. This reduces damage to the rim and provides a more secure engagement of the planar outer portion 162 against the wheel rim.

The non-drive side disc 150 may be used for wheels with rim brakes or disc brakes (the brakes being located on the non-drive side of the rear wheel of a bicycle). Embodiments of the non-drive side disc 150 suitable for disc brake wheels have a shallower doming as compared to embodiments suitable for rim brake wheels. This is in order to compensate for the presence of a disc brake calliper on the wheel axis outside the non-drive side disc. This is achieved by sizing the non-drive side disc body 151 such that, when the non-drive side disc 150 is attached to a wheel, the doming of the disc body 151 is sufficient to clear the spokes of the wheel, but shallow enough not to extend out to the disc brake calliper. For rim brake wheels, where no disc brake calliper is present, the doming need not be reduced - instead the diameter of the disc might be reduced to ensure that a portion of the rim is exposed (even when the disc 150 is attached to the wheel) which can be contacted by the rim brake.

The non-drive side disc 150 also comprise another part of the disc securement structure which is arranged to permit a connection between the drive side disc and the non-drive side disc. The disc securement structure on the non-drive side disc 150 comprises further apertures 158 through the non-drive side disc body 151. As shown in Figure 4, the apertures 158 of the disc securement structure are arranged symmetrically in a circular formation 168 centred on a centre point 170 of the disc 150. That is, the circular formation 168 of the apertures 158 of the disc securement structure is concentric with the inner edge 154 and outer edge 152 of the non-drive side disc 150. The apertures 158 of the disc securement structure are arranged individually, rather than in groups, and are spaced apart such that the apertures 158 are distributed equidistant around the circular formation 168. Spacing the apertures 158 apart in this way ensures that the structural integrity of the non-drive side disc body 151 is not compromised by the apertures 158. The position of the apertures 158 of the disc securement structure of the non-drive side disc 150 correspond to the positions of the apertures 108 of the disc securement structure of the drive side disc 100.

To connect the drive side disc 100 to the non-drive side disc 150, a retaining screw (e.g. of 15mm-20-25mm dimensions) is passed through an aperture 108 of the disc securement structure of the drive side disc 100 and through a corresponding aperture 158 of the corresponding disc securement structure of the non-drive side disc 150. The screw is then secured with a nut on the non-drive side and tightened to secure the two discs together. The screw could equally be passed from the non-drive side to the drive side and secured by a nut on the drive side. The circular formation 168 of evenly distributed apertures 108 is thus advantageous because it provides for an even distribution of forces between each aperture 108 which ensures a more secure connection between the two discs as well as improved durability.

By securing the drive side disc 100 the wheel towards the centre of the disc 100, near the inner edge 104 of the disc 100 (by way of apertures 106), and then also securing the non-drive side disc 150 to the drive side disc 100 (by way of apertures 108) towards the periphery of the discs 100, 150 near their outer edges 102, 152 provides a particularly secure fitting of the discs to prevents the discs from coming away from the wheel in use and thus ensuring aerodynamic performance.

### Materials

The bicycle wheel cover is described above as comprising discs formed of a thermoplastic material, preferably acrylonitrile butadiene styrene (ABS) thermoplastic, and the process for forming such thermoplastic disc by thermoforming is described below.

However, the bicycle wheel cover may instead comprise discs formed of carbon, or a carbon-based material, or a carbon composite material. Such discs may be produced for example using either a compression moulded carbon composite or a resin infused carbon composite laminate. The laminate may consist of virgin fibre, or of recycled carbon fibre, or of a mixture thereof. The tooling used for manufacturing these carbon, carbon-based or carbon composite discs may be metallic or composite. The tooling may be open or close moulded and cured using heat or at ambient temperature. The cured component of the tooling will be machined either by hand or using a CNC machine as a secondary operation.

Whether the discs are formed of a thermoplastic material, a carbon-based material or carbon composite material, or any other the material, the discs (or at least one of the discs forming the bicycle wheel cover) may comprise surface formations to improve the aerodynamic performance of the discs. In particular, the discs may comprise surface dimples, similar to the dimples formed on golf balls. The dimples may be formed on the discs, for example, by machining the discs after the discs are formed, or - if the discs are formed by moulding - by incorporating protrusions on the moulds so as to produce surface dimples on the discs at the same time as the discs are moulded to shape.

Advantageously, providing surface dimples on the discs may improve the aerodynamic performance of the discs, thus improving the aerodynamic performance of a bicycle to which the discs are attached to form a wheel cover. The aerodynamic advantages of dimpled surfaces - such as dimpled golf balls - are known. As applied to the present disclosure, dimples may improve aerodynamic performance of the bicycle wheel cover discs by causing the boundary layer of air on the upstream side of the disc to transition from laminar to turbulent. The turbulent boundary layer is able to remain attached to the surface of the disc longer than a laminar boundary with fewer eddies and so creates a narrower low-pressure wake behind the bicycle, and hence less pressure drag.

### Dimensions

Table 1 below shows example dimensions for various versions of the disc 100. Each version of the disc in Table 1 is for use with wheels having dimensions in a particular range, specifically:
- Version 'V1-rim' is directed at rim brake wheels with a 22 to 45mm rim depth;
- Version 'V1-disc' is directed at disc brake wheels with a 22 to 45mm rim depth;
- Version 'V2-rim' is directed at rim brake wheels with a 50 to 67mm rim depth;
- Version 'V2-disc' is directed at disc brake wheels with a 50 to 67mm rim depth;
- Version 'V3-rim' is directed at rim brake wheels with a 80 to 100mm rim depth; and
- Version 'V3-disc' is directed at disc brake wheels with a 80 to 100mm rim depth.

Thus, the dimensions shown in Table 1 were particularly chosen to accommodate these types of wheels. In particular, wheels with a small rim depth require a disc with a larger diameter such that there is sufficient overlap between the disc and the rim to provide a secure fit. For wheels with different dimensions, one or more of the below dimensions may be adjusted - e.g. for a smaller wheel, the outer edge 102 diameter may be reduced.

**Table 1**

| | | Version | | | | | |
|---|---|---|---|---|---|---|---|
| Disc | Dimension | V1-rim | V1-disc | V2-rim | V2-disc | V3-rim | V3-disc |
| Common dimensions | Outer edge 102 diameter [mm] | 600 | 600 | 550 | 550 | 500 | 500 |
| | Circular formation (disc securement structure) 118, 168 diameter [mm] | 526.5 | 526.5 | 476.5 | 476.5 | 430 | 430 |
| | Disc securement structure aperture 108 diameter [mm] | 6 | 6 | 6 | 6 | 6 | 6 |
| | Number of disc securement structure apertures 108, 158 | 8 | 8 | 8 | 8 | 7 | 7 |
| Drive side disc | Central opening 105 diameter [mm] | 75 | 75 | 75 | 75 | 75 | 75 |
| | Circular formation (wheel securement structure) 116 diameter [mm] | 89.3 | 89.3 | 89.3 | 89.3 | 89.3 | 89.3 |
| | Wheel securement structure aperture 106 diameter [mm] | 3 | 3 | 3 | 3 | 3 | 3 |
| | Doming distance 132 [mm] | 11 | 11 | 10 | 10 | 9 | 9 |
| | Aperture 122 width 124 [mm] | 45 | 45 | 45 | 45 | 45 | 45 |
| | Aperture 122 width length 126 [mm] | 80 | 80 | 80 | 80 | 80 | 80 |
| | Aperture 122 distance 128 to outer edge 102 [mm] | 40 | 40 | 40 | 40 | 40 | 40 |
| | Angle 130 [degrees] | 19.5 | 19.5 | 19.5 | 19.5 | 19.5 | 19.5 |
| Non-drive side disc | Central opening 155 diameter [mm] | 50 | 70 | 50 | 70 | 50 | 70 |
| | Doming distance 182 [mm] | 35 | 26 | 34.2. | 25 | 33.4 | 24.2 |

The inventors have carefully chosen the dimensions of each of the embodiments detailed in Table 1 following extensive experimentation to maximise aerodynamic performance of the disc 100. Further, the dimensions were chosen to ensure that each embodiment is suitable for a range of wheel dimensions, thus increasing utility to the user (who can re-use the same disc 100 for a range of wheels) and simplifying the manufacturing process as fewer different embodiments/models need to be manufactured so larger scale production of each embodiment is possible (i.e. there is no need to custom make the disc 100 for each specific user/wheel).

The dimensions of each embodiment are configured to allow the disc 100 to sit against the wheel and allow the disc 100 surface to follow the fall of the spokes to meet the rim of the wheel. The positioning and number of outer apertures 108 in the embodiments may provide an improved trade-off between installation time (which increases with the number of apertures) and a secure fit. The inventors have found that an inner edge diameter of 75mm may allow the disc 100 to clear the hub's flange on a wide range of wheels and may allow the disc 100 to fit flusher on the wheel and to 'hug' the spokes (i.e. reduce the distance between the spokes and the disc 100).

### Manufacturing method

Figure 7 shows an example method 200 for manufacturing the drive side disc 100 or the non-drive side disc 150. Method 200 uses thermoforming (as describe in further detail below) which provides a cost-effective method of manufacturing a rigid disc with good aerodynamic properties.

Firstly, at step 202, a material sheet is provided so that it may be operated on in subsequent steps of method 200. In the present example, the sheet is a thermoplastic sheet, preferably a 1.5mm sheet made from acrylonitrile butadiene styrene (ABS). Optionally, step 202 also comprises manufacturing the ABS sheet, preferably by extruding the ABS sheet. The inventors have found that ABS provides an improved trade-off between cost and performance and provides a high-performance disc at reduced cost.

Next, at step 204, the sheet provided at step 202 is thermoformed into the desired shape of the disc using a thermoforming module/machine. The thermoforming module comprises: a mould that defines the desired shape of the disc, heaters (in the form of a programmed heater bank) for heating the ABS sheet, and a clamp and a vacuum pump for pressing the sheet onto the mould.

The thermoforming process starts with setting up of the thermoforming module to ensure that the clamp is in the correct position in order to obtain a full vacuum seal guaranteeing the shape and definition of the disc during the forming process. The thermoforming module is preferably CNC (Computer Numerical Control) controlled, and as the next step after the initial set up, heater and forming settings for the thermoforming process are input into the module.

The sheet is then heated and placed onto the mould in the thermoforming module. The sheet is preferably heated uniformly prior to forming (i.e. when still flat) to ensure a substantially constant temperature across the sheet's surface. Next, the mould is moved towards the heated sheet while the sheet is held stationary by the clamp. When the mould presses against the sheet, the sheet is deform to the shape of the mould. A vacuum is then applied, using the vacuum pump, to press the sheet onto the mould thereby to further form the plastic sheet to the shape of the mould. The vacuum causes the sheet to press into the mould in a uniform manner and allows achieving good reproduction of the mould shape by the sheet. Optionally, further overpressure is applied using a pressure box arranged on top of the clamp. This allows a yet further improvement in the reproduction of the shape of the mould by the sheet.

The moulds used for forming the drive side disc 100 and the non-drive side disc 150 are different so as to produce the different disc shapes. In particular, the moulds for producing the drive side disc have a domed portion that has a diameter equal to the diameter of the intended disc so that the resultant disc is curved from its centre to its outer edge, whereas the moulds for the non-drive side disc have an inner domed portion (corresponding to the size of the inner domed portion of the intended disc) and an outer flat portion (corresponding to the size of the intended outer planar portion of the disc) so that the sheet (which is flat before forming) also comprises a domed inner portion 160 and a flat outer portion 162 after forming. Different moulds having different dimensions are used for the different disc versions shown in Table 1 above to form discs having the dimensions shown.

The mould is temperature controlled via cooling elements in the mould. In the present example, the cooling elements comprise cooling tubes carrying a flow of water to carry heat away from the mould thereby to cool the mould while the heated sheet is being moulded over the mould. The cooling elements are controlled so as to maintain the mould at a constant temperature during the forming process. Maintaining the mould at a constant temperature maintains dimensional stability of the sheet (i.e. the constant temperature ensures that the dimensions of the sheet remain constant during the forming process, rather than the sheet expanding and contracting under heating and cooling) and shape stability of the sheet (i.e. each part of the sheet is maintained at the same temperature, so each part deforms equally) during the forming process, reducing the probability of distortion of the sheet. Further, keeping the mould at a constant (relatively low) temperature may also allow easier demoulding (i.e. removal of the sheet from the mould) at the end of the forming cycle. The temperature at which the mould is maintained is preferably between 40°C and 60°C, more preferably between 45°C and 55°C, yet more preferably 50°C. This preferred temperature (range) enables achieving optimal dimensional stability of the sheet, in particular when using a curved mould required to form the curved/domed parts of the disc 100, 150).

In temperature controlling the mould, it is particularly important to control the temperature of the mould surface in contact with the sheet. Thus, the mould is preferably made from a material with a high specific heat capacity to enable fast heat transfer from the cooling tubes to this sheet-facing surface (despite the tubes being arranged at the opposite surface of the mould). Preferably the mould is made from metal, such as Aluminium.

Preferably, the (metal) mould is at least partially porous, in particular porous to air. The air-porous mould (over which the sheet is moulded) thus allows air to pass through it meaning that the vacuum pump can more effectively suck the sheet down onto the mould. This has the effect of reducing the number of defects in the sheet and ensuring that the sheet more accurately reproduce the shape of the mould.

The temperature control of the mould and the air porous mould together therefore provide a synergistic effect, which results in a number of technical advantages including: ensuring dimensional stability of the sheet during moulding to reduce defects; ensuring shape stability of the sheet during moulding to reduce defects; and ensuring accurate reproduction of the shape of the mould by the sheet. These advantages are particularly beneficial in relation to the bicycle wheel cover disclosed herein because a defect on the bicycle wheel cover can have serious consequences for stability (since the wheel cover will be turning at high speed with the bicycle wheel in use and, if the wheel cover has any deformities, these can the weight distribution and balance of the wheel which can cause dangerous vibrations and wobbling) and serious consequences for aerodynamic performance (since any deformities in the wheel cover shape will negatively impact the fit of the wheel cover against the wheel and thus reduce the streamlining effect of the wheel cover).

Next, once thermoforming is complete, at step 206, the formed disc is taken out of the thermoforming module and excess material is removed (e.g. cut) from the disc. The sheet provided at step 202 is larger than the mould used at step 204 to allow attachment of the sheet to the thermoforming machine (the excess material is required so that the sheet can be clamped at its edges during moulding). Thus, there is excess, unmoulded/unformed, material around the disc following the thermoforming process. This excess material is removed at step 206 which improves structural stability of the disc and reduce the chances of it distorting during cooling, thus giving a uniform shape. Step 206 is preferably performed immediately after thermoforming at step 204 (i.e. while the sheet is still hot, that is, still substantially at the temperature at which it was moulded), so that disc can cool down with the excess material removed which reduces the risk of the material deforming while cooling.

Subsequently, at step 208, the disc is machined. The, typically square or rectangular, sheet processed at step 206 is cut to the desired (in this example, circular) shape to form the disc body 101, 151, and other required features are machined in the disc - e.g. for the drive side disc, opening 105, apertures 106, 108, and 122, and for the non-drive side disc opening 155 and apertures 158.

The machining at step 208 is preferably done using a 5-axis CNC-controlled machining module. The machining module uses a former and presses the disc into a trimming fixture using a vacuum, and then uses a cutting tool to machine the disc into the desired shape. The machining module may be CNC programmed for each embodiment of the disc (e.g. for each version listed in Table 1).

Next, at step 210, the disc is deburred to remove unwanted material left over from the thermoforming step 204 or machining step 208. For example, the disc may be deburred manually using a pen cutter or a blade, or via a dry ice blasting process.

Finally, optionally, at step 212, a marking is added to the disc. For example, a logo or other marking (e.g. unit number) is provided using hot blocking or embossing.

It will be understood that the invention has been described above purely by way of example, and modifications of detail can be made within the scope of the invention as defined by the claims.

Reference numerals appearing in the claims are by way of illustration only and shall have no limiting effect on the scope of the claims.

## Claims

1. A bicycle wheel cover comprising:
a drive side disc (100) having a drive side disc body (101) adapted to cover the drive side of a bicycle wheel; and
a non-drive side disc (150) having a non-drive side disc body (151) adapted to cover the non-drive side of a bicycle wheel, the non-drive side disc body comprising a radial inner domed portion (160) and a radial outer planar portion (162),
wherein:
at least one of the drive side and non-drive side discs comprises a wheel securement structure arranged to permit a connection between the disc and a bicycle wheel;
at least one of the drive side and non-drive side discs comprises a disc securement structure arranged to permit a connection between the discs; and
the drive side disc body (101) is domed between its inner edge (104) and its outer edge (102).

2. A bicycle wheel cover according to Claim 1, wherein the doming of the drive side disc body (101) is shallower than the doming of the domed portion (160) of the non-drive side disc body (151).

3. A bicycle wheel cover according to Claim 1 or 2, wherein the doming of the drive side disc body (101) and/or the doming of the domed portion (160) of the non-drive side disc body (151) has:
a constant gradient; or
a gradient that varies along the disc radius.

4. A bicycle wheel cover according to any preceding claim, wherein the doming of the drive side disc body (101) and/or the doming of the domed portion (160) of the non-drive side disc body (151) has a gradient that increases with radius.

5. A bicycle wheel cover according to any preceding claim, wherein the drive side and/or non-drive side disc body comprises a central opening (105, 155) arranged to receive a bicycle wheel hub, and wherein the wheel securement structure is located around the central opening of at least one of the discs.

6. A bicycle wheel cover according to any preceding claim, wherein the wheel securement structure is located on the drive side disc (100), preferably solely on the drive side disc.

7. A bicycle wheel cover according to any preceding claim, wherein the wheel securement structure is arranged to permit a connection with at least one spoke of a bicycle wheel.

8. A bicycle wheel cover according to Claim 7, wherein the wheel securement structure comprises apertures (106) arranged to receive a tie for connecting with a spoke of a bicycle wheel, preferably wherein the apertures are arranged in a circular formation (116).

9. A bicycle wheel cover according to Claim 8, wherein the apertures (106) are arranged in groups, each group spaced apart from one another, preferably wherein the apertures are arranged in groups of three or more, more preferably in groups of between three and five apertures, and yet more preferably in groups of four apertures.

10. A bicycle wheel cover according to any preceding claim, wherein the disc securement structure comprises a structure located on the outer planar portion (162) of the non-drive side disc body (151), and a corresponding structure located on the drive side disc body (101).

11. A bicycle wheel cover according to Claim 10, wherein the disc securement structure comprises corresponding apertures (108, 158) through each of the drive side disc body (101) and non-drive side disc body (151), the apertures being adapted to receive a screw, preferably wherein the apertures are arranged in a circular formation (118, 168), more preferably wherein the apertures (108, 158) are equally distributed around the circular formation (118, 168).

12. A bicycle wheel cover according to any preceding claim, wherein at least one of the drive side disc body (101) and the non-drive side disc body (151) is rigid, preferably wherein both the drive side and non-drive side disc bodies are rigid.

13. A bicycle wheel cover according to any preceding claim, wherein the drive side disc body (101) and/or the non-drive side disc body (151) are formed as a single piece around their circumferences.

14. A bicycle wheel cover according to any preceding claim, wherein at least one of, preferably both of, the drive side and non-drive side disc bodies is formed of:
acrylonitrile butadiene styrene; or
carbon, a carbon-based material, or a carbon composite material, preferably wherein the drive side and/or non-drive side disc bodies comprises surface dimples.

15. A kit of parts comprising:
a bicycle wheel cover according to any preceding claim, and
an annular spacer, wherein the annular spacer comprises a central opening adapted to receive a bicycle wheel hub, and wherein the outer diameter of the annular spacer is more than or equal to the diameter of a central opening (105, 155) of the drive side and/or non-drive side disc body.

## Patentansprüche

1. Fahrradradabdeckung, die Folgendes umfasst:
eine antriebsseitige Scheibe (100) mit einem antriebsseitigen Scheibenkörper (101), der dafür ausgelegt ist, die Antriebsseite eines Fahrradrads abzudecken; und
eine nicht-antriebsseitige Scheibe (150) mit einem nicht-antriebsseitigen Scheibenkörper (151), der dafür ausgelegt ist, die nicht-antriebsseitige Seite eines Fahrradrades abzudecken, wobei der nicht-antriebsseitige Scheibenkörper einen radialen inneren gewölbten Abschnitt (160) und einen radialen äußeren planaren Abschnitt (162) umfasst,
wobei:
mindestens eine der antriebsseitigen und nicht-antriebsseitigen Scheiben eine Radbefestigungsstruktur umfasst, die dafür ausgelegt ist, eine Verbindung zwischen der Scheibe und einem Fahrradrad zu ermöglichen;
mindestens eine der antriebsseitigen und nicht-antriebsseitigen Scheiben eine Scheibenbefestigungsstruktur umfasst, die dafür ausgelegt ist, eine Verbindung zwischen den Scheiben zu ermöglichen; und
der antriebsseitige Scheibenkörper (101) zwischen seinem inneren Rand (104) und seinem äußeren Rand (102) gewölbt ist.

2. Fahrradradabdeckung nach Anspruch 1, wobei die Wölbung des antriebsseitigen Scheibenkörpers (101) flacher ist als die Wölbung des gewölbten Teils (160) des nicht-antriebsseitigen Scheibenkörpers (151).

3. Fahrradradabdeckung nach Anspruch 1 oder 2, wobei die Wölbung des antriebsseitigen Scheibenkörpers (101) und/oder die Wölbung des gewölbten Abschnitts (160) des nicht-antriebsseitigen Scheibenkörpers (151) Folgendes aufweist:
einen konstanten Gradienten; oder
einen Gradienten, der sich entlang des Scheibenradius verändert.

4. Fahrradradabdeckung nach einem der vorhergehenden Ansprüche, wobei die Wölbung des antriebsseitigen Scheibenkörpers (101) und/oder die Wölbung des gewölbten Abschnitts (160) des nicht-antriebsseitigen Scheibenkörpers (151) eine mit dem Radius zunehmende Steigung aufweist.

5. Fahrradradabdeckung nach einem der vorhergehenden Ansprüche, wobei der antriebsseitige und/oder nicht-antriebsseitige Scheibenkörper eine zentrale Öffnung (105, 155) umfasst, die zur Aufnahme einer Fahrradradnabe ausgelegt ist, und wobei die Radbefestigungsstruktur um die zentrale Öffnung von mindestens einer der Scheiben angeordnet ist.

6. Fahrradradabdeckung nach einem der vorhergehenden Ansprüche, wobei die Radbefestigungsstruktur an der antriebsseitigen Scheibe (100), vorzugsweise ausschließlich an der antriebsseitigen Scheibe, angeordnet ist.

7. Fahrradradabdeckung nach einem der vorhergehenden Ansprüche, wobei die Radbefestigungsstruktur dafür ausgelegt ist, eine Verbindung mit mindestens einer Speiche eines Fahrradrads zu ermöglichen.

8. Fahrradradabdeckung nach Anspruch 7, wobei die Radbefestigungsstruktur Öffnungen (106) umfasst, die dafür ausgelegt sind, eine Verbindung mit einer Speiche eines Fahrradrads aufzunehmen, vorzugsweise wobei die Öffnungen in einer kreisförmigen Formation (116) ausgelegt sind.

9. Fahrradradabdeckung nach Anspruch 8, wobei die Öffnungen (106) in Gruppen ausgelegt sind, wobei jede Gruppe voneinander beabstandet ist, vorzugsweise wobei die Öffnungen in Gruppen von drei oder mehr, noch bevorzugter in Gruppen von drei bis fünf Öffnungen und noch bevorzugter in Gruppen von vier Öffnungen ausgelegt sind.

10. Fahrradradabdeckung nach einem der vorhergehenden Ansprüche, wobei die Scheibenbefestigungsstruktur eine Struktur umfasst, die sich auf dem äußeren ebenen Teil (162) des Scheibenkörpers (151) der Nicht-Antriebsseite befindet, und eine entsprechende Struktur, die sich auf dem Scheibenkörper (101) der Antriebsseite befindet.

11. Fahrradradabdeckung nach Anspruch 10, wobei die Scheibenbefestigungsstruktur entsprechende Öffnungen (108, 158) durch den antriebsseitigen Scheibenkörper (101) und den nicht-antriebsseitigen Scheibenkörper (151) umfasst, wobei die Öffnungen zur Aufnahme einer Schraube ausgelegt sind, vorzugsweise wobei die Öffnungen in einer kreisförmigen Anordnung (118, 168) ausgelegt sind, noch bevorzugter wobei die Öffnungen (108, 158) gleichmäßig um die kreisförmige Anordnung (118, 168) herum verteilt sind.

12. Fahrradradabdeckung nach einem der vorhergehenden Ansprüche, wobei mindestens einer der antriebsseitigen Scheibenkörper (101) und der nicht-antriebsseitigen Scheibenkörper (151) starr ist, vorzugsweise wobei sowohl die antriebsseitigen als auch die nicht-antriebsseitigen Scheibenkörper starr sind.

13. Fahrradradabdeckung nach einem der vorhergehenden Ansprüche, wobei der antriebsseitige Scheibenkörper (101) und/oder der nicht-antriebsseitige Scheibenkörper (151) um ihren Umfang herum als ein einziges Stück gebildet sind.

14. Fahrradradabdeckung nach einem der vorhergehenden Ansprüche, wobei mindestens einer, vorzugsweise beide, der antriebsseitigen und der nicht-antriebsseitigen Scheibenkörper aus Folgendem gebildet sind:
Acrylnitril-Butadien-Styrol; oder
Kohlenstoff, einem Material auf Kohlenstoffbasis oder einem Kohlenstoffverbundmaterial, wobei die antriebsseitigen und/oder nicht-antriebsseitigen Scheibenkörper vorzugsweise Oberflächenvertiefungen umfassen.

15. Teilesatz, der Folgendes umfasst:
eine Fahrradradabdeckung nach einem der vorhergehenden Ansprüche, und
einen ringförmigen Abstandshalter, wobei der ringförmige Abstandshalter eine zentrale Öffnung umfasst, die dafür ausgelegt ist, eine Fahrradradnabe aufzunehmen, und wobei der Außendurchmesser des ringförmigen Abstandshalters größer als oder gleich dem Durchmesser einer zentralen Öffnung (105, 155) des antriebsseitigen und/oder nicht-antriebsseitigen Scheibenkörpers ist.

## Revendications

1. Enjoliveur de roue de bicyclette comprenant :
un disque côté entraînement (100) ayant un corps de disque côté entraînement (101) conçu pour recouvrir le côté entraînement d'une roue de bicyclette ; et
un disque côté opposé à l'entraînement (150) ayant un corps de disque côté opposé à l'entraînement (151) conçu pour recouvrir le côté opposé à l'entraînement d'une roue de bicyclette, le corps de disque côté opposé à l'entraînement comprenant une partie bombée interne radiale (160) et une partie plane externe radiale (162),
dans lequel :
au moins l'un des disques côté entraînement et côté opposé à l'entraînement comprend une structure de fixation de roue agencée pour permettre un raccordement entre le disque et une roue de bicyclette ;
au moins l'un des disques côté entraînement et côté opposé à l'entraînement comprend une structure de fixation de disque agencée pour permettre un raccordement entre les disques ; et
le corps de disque côté entraînement (101) est bombé entre son bord intérieur (104) et son bord extérieur (102).

2. Enjoliveur de roue de bicyclette selon la revendication 1, dans lequel le bombage du corps de disque côté entraînement (101) est moins profond que le bombage de la partie bombée (160) du corps de disque côté opposé à l'entraînement (151).

3. Enjoliveur de roue de bicyclette selon la revendication 1 ou 2, dans lequel le bombage du corps de disque côté entraînement (101) et/ou le bombage de la partie bombée (160) du corps de disque côté opposé à l'entraînement (151) présente :
un gradient constant ; ou
un gradient qui varie le long du rayon du disque.

4. Enjoliveur de roue de bicyclette selon l'une quelconque des revendications précédentes, dans lequel le bombage du corps de disque côté entraînement (101) et/ou le bombage de la partie bombée (160) du corps de disque côté opposé à l'entraînement (151) présente un gradient qui augmente avec le rayon.

5. Enjoliveur de roue de bicyclette selon l'une quelconque des revendications précédentes, dans lequel le corps de disque côté entraînement et/ou côté opposé à l'entraînement comprend une ouverture centrale (105, 155) agencée pour recevoir un moyeu de roue de bicyclette, et dans lequel la structure de fixation de roue est située autour de l'ouverture centrale d'au moins l'un des disques.

6. Enjoliveur de roue de bicyclette selon l'une quelconque des revendications précédentes, dans lequel la structure de fixation de roue est située sur le disque côté entraînement (100), de préférence uniquement sur le disque côté entraînement.

7. Enjoliveur de roue de bicyclette selon l'une quelconque des revendications précédentes, dans lequel la structure de fixation de roue est agencée pour permettre un raccordement avec au moins un rayon d'une roue de bicyclette.

8. Enjoliveur de roue de bicyclette selon la revendication 7, dans lequel la structure de fixation de roue comprend des ouvertures (106) agencées pour recevoir une attache destinée à être raccordée à un rayon d'une roue de bicyclette, de préférence dans lequel les ouvertures sont agencées dans une formation circulaire (116).

9. Enjoliveur de roue de bicyclette selon la revendication 8, dans lequel les ouvertures (106) sont agencées en groupes, chaque groupe étant espacé l'un de l'autre, de préférence dans lequel les ouvertures sont agencées en groupes de trois ou plus, de préférence encore en groupes compris entre trois et cinq ouvertures, et encore plus préférentiellement en groupes de quatre ouvertures.

10. Enjoliveur de roue de bicyclette selon l'une quelconque des revendications précédentes, dans lequel la structure de fixation de disque comprend une structure située sur la partie plane externe (162) du corps de disque côté opposé à l'entraînement (151), et une structure correspondante située sur le corps de disque côté entraînement (101).

11. Enjoliveur de roue de bicyclette selon la revendication 10, dans lequel la structure de fixation de disque comprend des ouvertures correspondantes (108, 158) à travers chacun du corps de disque côté entraînement (101) et du corps de disque côté opposé à l'entraînement (151), les ouvertures étant conçues pour recevoir une vis, de préférence dans lequel les ouvertures sont agencées en une formation circulaire (118, 168), de préférence encore dans lequel les ouvertures (108, 158) sont réparties de manière égale autour de la formation circulaire (118, 168).

12. Enjoliveur de roue de bicyclette selon l'une quelconque des revendications précédentes, dans lequel au moins l'un parmi le corps de disque côté entraînement (101) et le corps de disque côté opposé à l'entraînement (151) est rigide, de préférence dans lequel les corps de disque côté entraînement et côté opposé à l'entraînement sont tous les deux rigides.

13. Enjoliveur de roue de bicyclette selon l'une quelconque des revendications précédentes, dans lequel le corps de disque côté entraînement (101) et/ou le corps de disque côté opposé à l'entraînement (151) sont formés d'une seule pièce autour de leurs circonférences.

14. Enjoliveur de roue de bicyclette selon l'une quelconque des revendications précédentes, dans lequel au moins l'un, de préférence les deux, des corps de disque côté entraînement et côté opposé à l'entraînement est/sont formé(s) de :
acrylonitrile butadiène styrène ; ou
carbone, un matériau à base de carbone, ou un matériau composite de carbone, de préférence dans lequel les corps de disque côté entraînement et/ou côté opposé à l'entraînement comprennent des alvéoles de surface.

15. Kit de pièces comprenant :
un enjoliveur de roue de bicyclette selon l'une quelconque des revendications précédentes, et
une entretoise annulaire, dans lequel l'entretoise annulaire comprend une ouverture centrale conçue pour recevoir un moyeu de roue de bicyclette, et dans lequel le diamètre extérieur de l'entretoise annulaire est supérieur ou égal au diamètre d'une ouverture centrale (105, 155) du corps de disque côté entraînement et/ou côté opposé à l'entraînement.
